Europäisches Patentamt

European Patent Office

Office européen des brevets

(11) Veröffentlichungsnummer : **0 144 620**
**B1**

# (12) EUROPÄISCHE PATENTSCHRIFT

(45) Veröffentlichungstag der Patentschrift :
13.12.89

(51) Int. Cl.⁴ : **B 60 J   1/10**

(21) Anmeldenummer : 84112142.9

(22) Anmeldetag : 10.10.84

(54) **Fahrzeugfenster.**

(30) Priorität : 07.12.83 DE 3344180

(43) Veröffentlichungstag der Anmeldung :
19.06.85 Patentblatt 85/25

(45) Bekanntmachung des Hinweises auf die Patenterteilung : 13.12.89 Patentblatt 89/50

(84) Benannte Vertragsstaaten :
AT CH DE FR GB IT LI SE

(56) Entgegenhaltungen :
EP--A-- 0 009 246
DE--A-- 3 117 103

(73) Patentinhaber : **Messerschmitt-Bölkow-Blohm Gesellschaft mit beschränkter Haftung
Robert-Koch-Strasse
D-8012 Ottobrunn (DE)**

(72) Erfinder : **Stark, Reimund
Flurstrasse 10
D-8891 Griesbeckerzell (DE)**
Erfinder : **Buhl, Erwin
Mozartring 8
D-8851 Kaisheim (DE)**

EP 0 144 620 B1

## Beschreibung

Die Erfindung bezieht sich auf ein Fahrzeugfenster nach dem Oberbegriff des Anspruchs 1.

Bei bekannten, außenhautbündigen Isolierglasfenstern dieser Art (DE-A-3 117 103.6) besteht die lösbare Fensterbefestigung aus einer Vielzahl von in Umfangsrichtung des Fensters verteilten Befestigungsschrauben, durch die der Fensterrahmen von der Fahrzeuginnenseite aus ohne Verletzung der Fahrzeugaußenhaut mit der Fahrzeugstzuktur verschraubt wird. Wegen der unvermeidbaren Fertigungstoleranzen der Fahrzeugstrutur müssen die entsprechenden Aufnahmebohrungen für die Befestigungsschrauben aus Gründen einer exakten Positionierung des Fahrzeugfensters im Fensterausschnitt jeweils für jedes Fenster individuell mit dem Fensterrahmen als Bohrschablone in die Fahrzeugstruktur eingebracht werden, was ein sehr mühsamer und kostenintensiver Vorgang ist, insbesondere wenn zur Fensterbefestigung eine sehr große Anzahl von Befestigungsstellen -bei modernen Schienenfahrzeug-Fenstern etwa dreißigbenötigt wird.

Aufgabe der Erfindung ist es, das Fahrzeugfenster nach dem Oberbegriff des Anspruchs 1 so auszubilden, daß die zum Ausgleich von Fertigungstoleranzen erforderliche, individuelle Montage des Fensterrahmens im Fensterausschnitt der Fahrzeugstrutur wesentlich vereinfacht wird.

Diese Aufgabe wird erfindungsgemäß durch das im Anspruch 1 gekennzeichnete Fahrzeugfenster gelöst.

Aufgrund der besonderen Ausbildung der Fensterbefestigung und der Fahrzeugstrutur im Bereich des Fensterausschnitts läßt sich das erfindungsgemäße Fenster problemlos und in den Toleranzgrenzen des Fensterausschnitts variabel an der Fahrzeugstrutur befestigen, ohne daß jede Befestigungsstelle einzeln in der richtigen Position an der Fahrzeugstrutur verbohrt werden muß. Hierdurch wird der Herstellungs- und Montageaufwand für die Fensterbefestigung ganz erheblich verringert und die Befestigungsmittel für den Fensterrahmen können mühelos von der Fahrzeuginnenseite aus, d. h. ohne Verletzung der Fahrzeugaußenhaut, sicher an der Fahrzeugstrutur verankert werden.

Eine besonders einfache und sichere Verankerung der Befestigungsmittel, die zugleich ein rasches Auswechseln des Fensterrahmens — etwa für den Fall einer Beschädigung des Fensters — ermöglicht, wird gemäß Anspruch 2 dadurch erreicht, daß die Befestigungsmittel jeweils einen den Hohlprofilschlitz durchgreifenden, innerhalb des Hohlprofils über eine in diesem verschieblich und verdrehsicher geführte Sicherungsmutter verspannbaren Gewindebolzen enthalten, wobei die Sicherungsmutter gemäß Anspruch 3 aus Gründen einer exakten, leichtgängigen Führung und im Hinblick auf eine möglichst großflächige Anlage an der Innenseite des Hohlprofils vorzugsweise nach Art eines Nutensteins mit einem einstückigen, in den Hohlprofilschlitz engsitzend eingreifenden Bund versehen ist.

Das einen integralen Bestandteil der Fahrzeugstruktur bildende Hohlprofil wird gemäß Anspruch 4 aus Herstellungsgründen zweckmäßigerweise als in Längsrichtung geschlitztes Strangpreßprofil vorgefertigt, und gemäß Anspruch 5 wird eine einfache Einstellmöglichkeit des Fensterrahmens auch in Querrichtung des Profilschitzes zweckmäßigerweise durch entsprechend erweitere Aufnahmebohrungen im Profilschenkel des Fensterrahmenprofils erzielt.

Die Erfindung wird nunmehr anhand eines Ausführungsbeispieles in Verbindung mit den Zeichnungen näher erläutert. Es zeigt :

Fig. 1 eine teilweise gebrochene Ansicht eines Fahrzeugfensters im Bereich einer Fensterecke ;

Fig. 2 einen schematischen Schnitt längs der Linie II-II der Fig. 1.

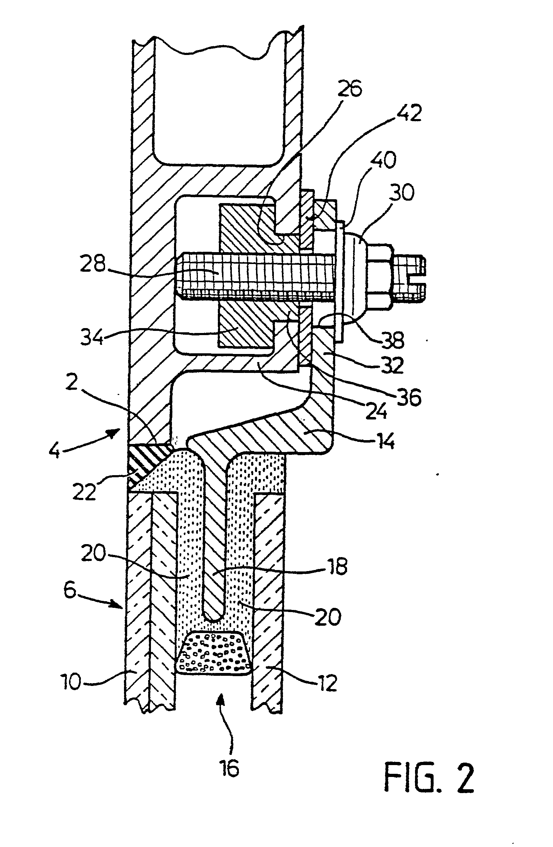

Das gezeigte Fahrzeugfenster enthält eine im Fensterausschnitt 2 der Fahrzeugstruktur 4 angeordnete Isolierverglasung 6 mit einer mit der Fahrzeugaußenhaut 8 bündigen Außenscheibe 10 in Form einer Verbundglasscheibe und einer als Einscheibensicherheitsglas ausgebildeten Innenscheibe 12, die über ein die Isolierverglasung 6 umgreifendes Fensterrahmenprofil 14, dessen innerer, in den Scheibenzwischenraum 16 eingreifender Profilschenkel 18 mittels eines Montageklebers 20 mit den Isolierglasscheiben 10, 12 feststehend verbunden ist, von der Fahrzeuginnenseite aus lösbar an der Fahrzeugstruktur 4 befestigt sind. Die lösbare Fensterbefestigung gestattet ohne Verletzung der Fahrzeugaußenhaut 8 eine in Richtung der Flächenerstreckung des Fensters in bestimmten Grenzen variable Montage der aus der Isolierverglasung 6 und dem Fensterrahmenprofil 14 bestehenden Baueinheit, um diese unter Berücksichtigung der Fertigungstoleranzen des Fensterausschnitts 2 mit einer möglichst gleichmäßigen Spaltbreite zwischen Außenscheibe 10 und Fensterausschnitt 2 mit der Fahrzeugstrutur 4 zu verkoppeln, wobei dieser Ausgleichsspalt 22 nach der endgültigen Positionierung und Befestigung des Fensters z. B. durch eine Silikonmasse (Fig. 2) abgedichtet wird.

Die lösbare Fensterbefestigung enthält ein in die Fahrzengstruktur 4 integriertes, den Fensterausschnitt 2 umschließendes Hohlprofil 24, das mit einem sich zur Fahrzeuginnenseite öffnenden Längsschlitz 26 versehen ist. Am Hohlprofil 24 sind die jeweils aus einem am inneren Ende geschlitzten Gewindebolzen 28 und einer selbstsichernden Befestigungsmutter 30 bestehenden Befestigungsmittel für den das Hohlprofil 24 auf der Fahrzeuginnenseite übergreifenden Profilschenkel 32 des Fensterrahmenprofils 14 in Längsrichtung des Profilschlitzes 26 einstellbar verankert. Zu diesem Zweck ist der Gewindebolzen 28 im Inneren des Hohlprofils 24 mit einer den Profilschitz 26 hintergreifenden Sichezugsmutter 34 verschraubt, die am Hohlprofil 24 nach Art eines Nutensteins über einen einstückigen, in den Profilschlitz 26 engsitzend eingreifenden Bund 36 längsverschieblich, aber verdrehsicher geführt ist. Durch Festziehen des Gewindebolzens 28 ist es somit möglich, diesen mit Hilfe der Sicherungsmutter 34 an beliebiger Stelle in Längsrichtung des Profilschlitzes 26 im Hohlprofil 24 zu verspannen.

Eine quer zur Längsrichtung des Profilschlitzes 26 variable Einstellmöglichkeit wird dadurch erreicht, daß die entsprechenden Aufnahmebohrungen 38 für den Gewindebolzen 28 im Profilschenkel 32 als quer zur Schlitzlängsrichtung erweiterte, zur Befestigungsmutter 30 hin durch Beilagscheiben 40 abgedeckte Langlöcher ausgebildet sind. Zwischen dem Hohlprofil 24 und dem Profilschenkel 32 werden schließlich noch Ausgleichsmittel 42 angeordnet, deren Dicke so gewählt wird, daß die Außenfläche der Außenscheibe 10 im eingebauten Zustand exakt fluchtend zur Fahrzeugaußenhaut 8 ausgerichtet ist.

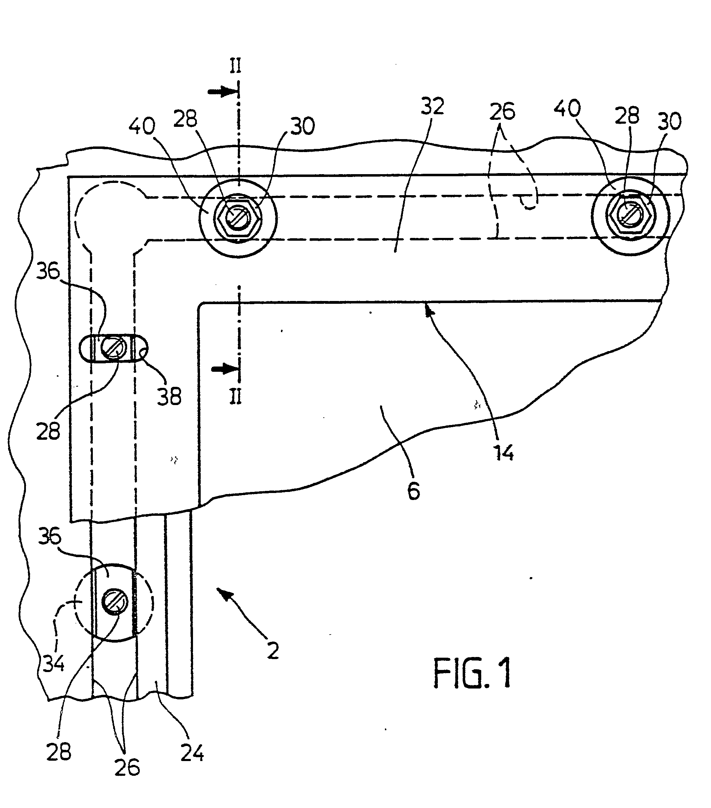

Die Montage des beschriebenen Fahrzeugfensters im Fensterausschnitt 2 der Fahrzeugstruktur 4 ist denkbar einfach : Zunächst wird eine der Anzahl der Aufnahmebohrungen 38 im Fensterrahmenprofil 14 entsprechende Anzahl von Gewindebolzen-Mutterkombinationen 28, 34 über erweiterte Profilschlitzöffnungen im Eckbereich des Fensterausschnitts (in Fig. 1 in gestrichelten Linien dargestellt) in das Hohlprofil 24 eingesetzt und mit dem ordnungsgemäß, d. h. mit einer möglichst gleichförmigen Breite des Ausgleichsspalts 22 bezüglich des Fensterausschnitts 2 ausgerichteten Fensterrahmen 14 als Positionierschablone an der Fahrzeugstruktur 4 verankert. Zu diesem Zweck müssen die einzelnen Gewindebolzen 28 und Sicherungsmuttern 34 lediglich in eine durch die Aufnahmebohzungen 38 vorgegebene Lage im Profilschlitz 26 verschoben und — etwa mit Hilfe eines in den fahrzeuginnenseitigen Gewindebolzenschlitz eingesetzten Schraubenziehers — festgezogen werden, wodurch eine äußerst arbeitssparende, in Schitzlängsrichtung variable und sichere Befestigung der Gewindebolzen 28 zwischen dem geschitzten, fahrzeuginnenseitigen Gewindebolzen 28 und dem fahrzeugaußenseitigen Wandabschnitt des Hohlprofils 24 gewärleistet wird. Nach dem Aufschrauben und Festziehen der Befestigungsmuttern 30 unter Zwischenlage des Ausgleichsmittel 42 einerseits und der Beilagscheiben 40 andererseits ist die lösbare Fensterbefestigung fertiggestellt, woraufhin der Ausgleichspalt 22 durch eine Silikonmasse abgedichtet wird.

Die lösbare Fensterbefestigung mit dem als geschlitztes Strangpreßprofil vorgefertigten Hohlprofil 24 als integral verschweißter Bestandteil der Fahrzeugstruktur 4 erfordert keine Zerspanungsarbeit am Fahrzeug-Rohbau und gestattet einen raschen und problemlosen Austausch eines beschädigten Fahrzeugfensters.

## Patentansprüche

1. Fahrzeugfenster, insbesondere für ein Hochgeschwidigkeits-Schienenfahrzeug, mit einem feststehend mit einer außenhautbündigen Fensterverglasung (6) verbundenen Fensterrahmenprofil (14), das einen den Fensterausschnitt (2) der Fahrzeugstruktur auf der Fahrzeuginnenseite übergreifenden, an dieser über Befestigungsmittel (28, 34) gesicherten Profilschenkel (32) aufweist, dadurch gekennzeichnet, daß die Fahrzeugstruktur (4) im Bereich des Fensterausschnitts (2) als fahrzeuginnenseitig geschlitztes Hohlprofil (24) ausgebildet ist und die Befestigungsmittel (28, 34) jeweils den Hohlprofilschlitz (26) hintergreifend in Schlitzlängsrichtung verschieblich am Hohlprofil positionierbar sind.

2. Fahrzeugfenster nach Anspruch 1, dadurch gekennzeichnet, daß die Befestigungsmittel jeweils einen den Hohlprofilschlitz (26) durchgreifenden, innerhalb des Hohlprofils (24) über eine in diesem verschieblich und verdrehsicher geführte Sicherungsmutter (34) verspannbaren Gewindebolzen (28) enthalten.

3. Fahrzeugfenster nach Anspruch 2, dadurch gekennzeichnet, daß die Sichezugsmutter (34) mittels eines einstückig angeformten, im Hohlprofilschitz (26) gleitend geführten Bunds (36) im Hohlprofil (24) verdrehsicher angeordnet ist.

4. Fahzeugfenster nach einem der vorhergehenden Ansprüche, dadurch gekennzeichnet, daß das Hohlprofil (24) ein in Längsrichtung zumindestens teilweise geschlitztes Strangpreßprofil ist.

5. Fahrzeugfenster nach einem der vorhergehenden Ansprüche, dadurch gekennzeichnet, daß der Profilschenkel (32) des Fensterrahmenprofils (14) mit quer zur Längsrichtung des Hohlprofilschlitzes (26) erweiterten Aufnahmebohrungen (38) für die Befestigungsmittel (28 ; 34) versehen ist.

## Claims

1. A vehicle window more especially for a highspeed rail vehicle, having a window-frame profile (14) which is connected fixedly to a window glazing (6) flush with the outer skin and which has a profile limb (32) which engages over the window aperture (2) of the vehicle structure (4) on the inside of the vehicle and which is secured to this by way of fastening means (28, 34), characterised in that the vehicle structure (4) in the region of the window aperture (2) is designed as a hollow profile (24) which is slotted on the inside of the vehicle and the fastening means (28, 34), in each case engaging behind the hollow-profile slot (26), are positionable on the hollow profile so as to be displaceable in the longitudinal direction of the slot.

2. A vehicle window according to claim 1, characterised in that the fastening means in each case contains a threaded bolt (28) which engages through the hollow-profile slot (26) and which is clampable inside the hollow profile (24) by way of a lock nut (34) which is guided in this displaceably and in a torsionally secure manner.

3. A vehicle window according to claim 2, characterised in that the lock nut (34) is arranged in a torsionally secure manner in the hollow profile (24) by means of a collar (36) which is integrally formed in one piece and which is guided slidingly in the hollow-profile slot (26).

4. A vehicle window according to one of the preceding claims, characterised in that the hollow profile (24) is an extruded profile which is at least partially slotted in the longitudinal direction.

5. A vehicle window according to one of the preceding claims, characterised in that the profile limb (32) of the window-frame profile (14) is provided with reception bores (38), widened transversely to the longitudinal direction of the hollow-profile slot (26), for the fastening means (28, 34).

**Revendications**

1. Fenêtre de véhicules en particulier pour un véhicule guidé de grande vitesse, comprenant un profilé de châssis (14) qui, solidaire d'un vitrage (6) venant à fleur de la surface extérieure, comporte une branche (32) qui recouvre le bord de la baie de fenêtre (2) de la structure du véhicule sur sa face interne et qui est assujettie à celle-ci par des moyens de fixation (28, 34), caractérisée par le fait que la structure (4) du véhicule dans la zone de la baie (2) de la fenêtre est réalisée sous la forme d'un profilé creux (24) fendu du côté intérieur du véhicule et que les moyens de fixation (28, 34) peuvent être positionnés de façon déplaçable sur le profilé creux dans le sens longitudinal de la fente (26) en restant accrochés derrière celle-ci.

2. Fenêtre de véhicules selon la revendication 1, caractérisée par le fait que les moyens de fixation comportent respectivement un boulon fileté (28) traversant la fente (26) du profilé creux et pouvant être serré à l'intérieur du profilé creux (24) par un écrou de blocage (34) déplaçable dans celui-ci sans possibilité de rotation.

3. Fenêtre de véhicules selon la revendication 2, caractérisée par le fait que l'écrou de blocage (34) est engagé fixé en rotation dans le profilé creux (24) au moyen d'une collerette (36) façonnée d'une seule pièce et montée coulissante dans la fente (26) du profilé creux.

4. Fenêtre de véhicules selon l'une des revendications précédentes, caractérisée par le fait que le profilé creux (24) est un profilé filé fendu tout au moins en partie dans le sens longitudinal.

5. Fenêtre de véhicules selon l'une des revendications précédentes, caractérisée par le fait que pour recevoir les moyens de fixation (28, 34), la branche (32) du profilé (14) du châssis de fenêtre est muni de perçages (38) élargis transversalement au sens longitudinal de la fente (26) du profilé creux.

FIG. 1

FIG. 2